# EUROPEAN PATENT APPLICATION

(11) **EP 2 738 433 A1**
(43) Date of publication of application: **04.06.2014**
(21) Application number: 13382466.4
(22) Date of filing: 19.11.2013
(51) Int. Cl.: F16K 35/02, F16K 5/02

(54) **Gas tap for a cooking appliance**

(30) Priority: 03.12.2012 ES 201231288 U; 21.12.2012 ES 201231357 U
(71) Applicant: Coprecitec, S.L., 20550 Aretxabaleta (ES)
(72) Inventor: Mateos Martin, Ruben, Marietta, Georgia 30066 (US); Gerenabarrena Meabebasterretxea, Unai, 20600 Eibar (ES); Ceron Varela, Arturo Omar, 45188 Jalisco (MX); Oliva Aguayo, Jose Luis, 45560 Jalisco (MX); Brunner Diestel, Juan Jorge, 4505 Jalisco (MX)
(74) Representative: Igartua, Ismael

(57) **Abstract**

Gas tap for a cooking appliance, comprising a tap body (10) with a conical internal housing (10a) suitable for receiving a conical rotational member (11) for regulating gas flow (G), a manually-operated rotary shaft (2) coupled to the conical regulating member (11), and provided with a transverse means (12), a return spring (13) of the rotary shaft (2) that resists against the pressing movement of said shaft (2), and a cover (14) covering the housing (10a) of the tap body (10), guiding the rotation of the shaft (2) in cooperation with the transverse means (12), wherein the gas tap (1) comprises at least one resistance means (4), other than the return spring (13), that resists against the pressing movement of the rotary shaft (2).

## Description

### TECHNICAL FIELD

The present invention is related to a gas tap of the type having a conical regulating member and a rotary driving shaft used in a cooking appliance, and particularly with means that resist against the pressing movement of the rotary shaft.

### PRIOR ART

Gas taps with pressing and turning means that allow the movement of the gas flow regulating member are known. Safety rules for operating gas taps require that to open the gas flow passage, at least two maneuvers must be performed first, such as pressing the rotary shaft and subsequently turning it, driving the conical regulating member until opening the gas flow.

GB682095 A describes a gas tap comprising a tap body with a conical internal housing suitable for receiving a conical rotational member for regulating gas flow, and a manually-operated rotary shaft integrally coupled to the conical regulating member, and provided with a transverse rotation blocking means. Said transverse blocking means comprises a positioning washer integrally fitted to the rotary shaft, said fitting allowing axial sliding and not rotary sliding on said shaft, the washer projecting perpendicular to said shaft, and an elastic washer assembled on the rotary shaft which can turn about the shaft and slide axially along the shaft.

To open the gas flow, the rotary shaft is pressed and the transverse means is thus released, and the shaft is then turned until reaching a position of the conical regulating member in which gas passage is opened. To prevent safety problems according to rules for operational safety, the gas tap comprises resistance means resisting against said movements. With respect to the pressing movement of the rotary shaft, the gas tap comprises a return spring of the rotary shaft that resists against the pressing movement of said shaft, the return spring being assembled between a flange of the shaft and the lower portion of the elastic washer. The gas tap also comprises a cover covering the housing of the tap body, said cover guiding the rotation of the shaft with the cooperation of the transverse blocking means.

### DISCLOSURE OF THE INVENTION

The object of the invention is to provide a gas tap for a cooking appliance as described in the claims.

The gas tap of the invention comprises a tap body with a conical internal housing suitable for receiving a conical rotational member for regulating gas flow, a manually-operated rotary shaft coupled to the conical regulating member, and provided with a transverse means accompanying the rotary shaft in its rotation, a return spring of the rotary shaft, arranged between the conical regulating member and the rotary shaft, that resists against the pressing movement of said shaft, and a cover covering the housing of the tap body and guiding the rotation of the shaft in cooperation with the transverse means.

The gas tap of the invention further comprises a resistance means, other than the return spring of the rotary shaft, resisting against the pressing movement of the rotary shaft. A safety measure against accidental movements of the rotary shaft is added to the measures required by the safety rules with this resistance means. A spring is added to the gas tap, insofar as the return spring has a close-fitting design for both fitting the conical member in the conical internal housing of the tap body, and for causing the rotary shaft to return against the cover when no pressing movement is applied on the shaft. Resorting to a stronger return spring can cause the conical member to become jammed in the conical internal housing of the tap body and not be able to perform the gas flow regulation function.

The accidental movements pressing the rotary shaft that can be caused by the user can include the user unintentionally resting against or turning the shaft of the taps, or in the case of children, movements caused while playing. By arranging the resistance means, said accidental movements are hindered.

These and other advantages and features of the invention will become evident in view of the drawings and the detailed description of the invention.

### DESCRIPTION OF THE DRAWINGS

Figure 1 shows a longitudinal section view of an embodiment of a gas tap for a cooking appliance according to the invention with the resistance means arranged inside the gas tap.
Figure 2 shows an exploded perspective view of the gas tap of Figure 1.
Figure 3 shows a plan view of the cover of the gas tap of Figure 1.
Figure 4 shows a longitudinal section view of an embodiment of a gas tap for a cooking appliance according to the invention with the resistance means arranged outside the tap body.
Figure 5 shows a perspective view of the protective element of the gas tap of Figure 4.
Figure 5a shows a front view of the protective element of the gas tap of Figure 4.
Figure 6 shows a longitudinal section view of a second embodiment of the gas tap 1 of the invention with the resistance means arranged outside the tap body.
Figure 7 shows a perspective view of the fixed body of the protective assembly of the gas tap of Figure 6.
Figure 8 shows a longitudinal section view of the fixed body of Figure 7.
Figure 9 shows a perspective view of the movable body of the protective assembly of the gas tap of Figure 6.
Figure 10 shows a longitudinal section view of the movable body of Figure 9.
Figure 11 shows a longitudinal section view of a third embodiment of the gas tap of the invention with the resistance means arranged outside the tap body.
Figure 12 shows a top perspective view of the ignition switch assembly of the gas tap of Figure 11.
Figure 13 shows a plan view of the ignition switch assembly of Figure 12 without the front cover.
Figure 14 shows a perspective view of the cam assembly of the ignition switch assembly of Figure 12.
Figure 15 shows a front section view of the ignition switch assembly according to line XII-XII of Figure 12.
Figure 15a shows a perspective section view of the ignition switch assembly according to line XII-XII of Figure 12.
Figure 16 shows a front perspective view of the drive cover of the ignition switch assembly of Figure 12.
Figure 17 shows a rear perspective view of the drive cover of the ignition switch assembly of Figure 12.
Figure 18 shows a cross-section view of the gas tap according to the XV-XV of Figure 11.

### DETAILED DISCLOSURE OF THE INVENTION

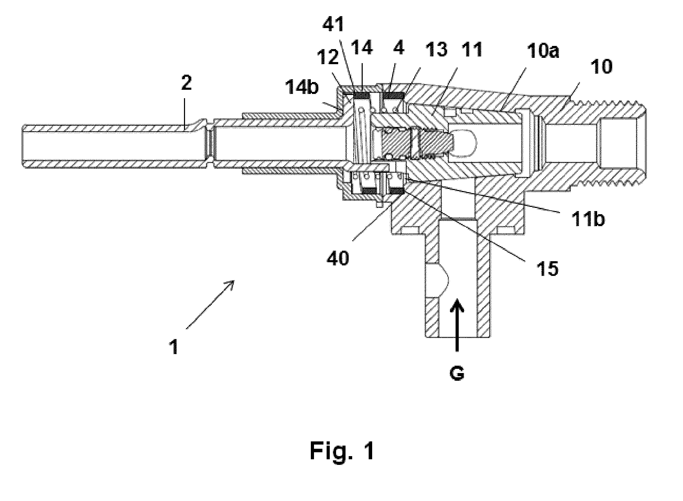

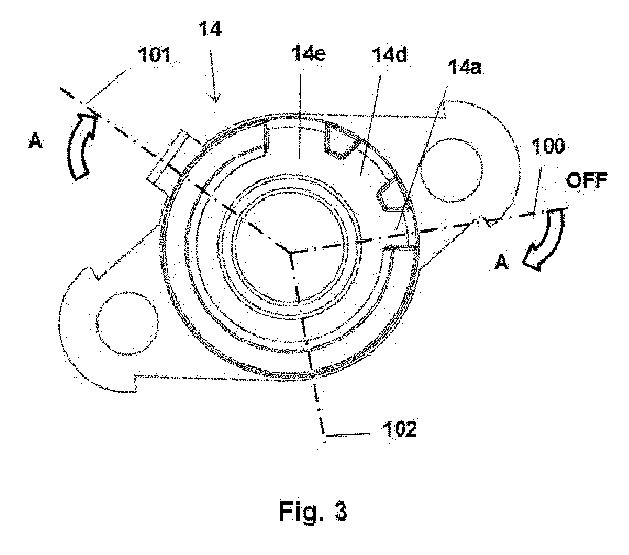

Figure 1 shows the gas tap 1 of the invention comprising a tap body 10 with a conical internal housing 10a suitable for receiving a conical rotational member 11 for regulating gas flow G. The tap 1 also comprises a manually-operated rotary shaft 2 coupled to the conical regulating member 11, said rotary shaft 2 being provided with a transverse means 12, and a return spring 13 of the rotary shaft 2 that resists against the axial pressing movement of the rotary shaft 2 when the user operates the gas tap 1. The gas tap 1 also comprises a cover 14 covering the housing 10a of the tap body 10 and guiding the rotation of the rotary shaft 2 in cooperation with the transverse means 12. The rotary shaft 2 can rotate an angle A in either of the two directions, normally greater than 111bº, for gas flow G supply. The angle of rotation A is from an initial position 100 of rotation corresponding to the closed OFF position of the gas flow supply to a final position 101 corresponding to a minimum gas flow, passing through an intermediate position 102 of maximum gas flow supply, as shown in Figure 3. The cover 14 is in the form of a tubular bushing, comprising a narrow tubular portion the internal diameter of which fits the diameter of the shaft 2, and a cylindrical portion provided with a closure base resting on the tap body 10, and having a diameter substantially greater than the diameter of the tubular portion.

The cover 14 comprises on its internal face a sliding surface 14b which extends in the angle of rotation A, the transverse means 12 sliding on the sliding surface 14b when the rotary shaft 2 is being turned, more specifically between the intermediate position 102 and the final position 101 of the angle of rotation A in both directions, when the user no longer presses the rotary shaft 2, and he/she turns said shaft 2 in search for the suitable gas regulation position.

However, this resistance against the pressing movement is slight, although it complies with the regulatory requirement and the user does not perceive it as a deterrent force in the event of possible accidents. To make the pressing movement of the shaft 2 more difficult and to prevent accidents, the gas tap 1 of the invention comprises at least one resistance means 4. This resistance means 4, which is different from the return spring 13, resists against the movement of the rotary shaft 2.

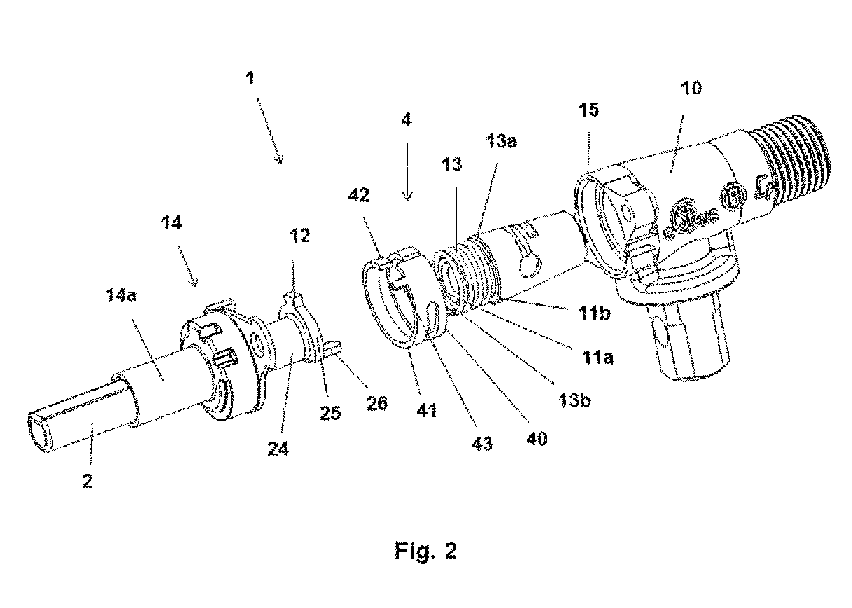

Figure 1 shows an embodiment of the gas tap 1 of the invention in a longitudinal section view wherein the resistance means 4 resists against the axial pressing movement of the rotary shaft 2, and Figure 2 shows the embodiment of the gas tap 1 of Figure 1 in an exploded perspective view. The pressing movement is one of the two minimum maneuvers required by the gas tap safety rules. In the state of the art, the pressing movement of the shaft 2 is the first maneuver performed by the user for opening the gas tap 1, and to make said maneuver more difficult and to ensure that the rotary shaft 2 returns to its initial axial position after pressing, the gas tap 1 has a return spring 13. In the gas tap 1 of the invention, to make the pressing maneuver even more difficult and to prevent unintentional movements that can cause accidents, the resistance means 4, which is a spring in the embodiment shown in Figures 1 and 2, is added. In this embodiment, the spring 4 is a coil spring with two spirals or loops, but it is not limiting and the number of loops, the thicknesses of the material, and the dimensions can vary depending on the gas tap 1 in which it is assembled, and on the resistance force against pressing the rotary shaft 2 to be achieved.

The spring 4 comprises a lower edge 40 which is located in one and the same plane, the edge 40 being supported on an edge 15 of the tap body 10. Therefore, it can be considered that the resistance means 4, i.e., the spring, is supported in a fixed portion, i.e., the tap body 10, of the gas tap 1. The spring 4 also comprises an upper edge 41 with a coil formation, and therefore is not entirely located in one plane. Therefore, the upper edge 41 rests on at least one section 43 in the transverse means 12 of the rotary shaft 2, hence when the user presses the shaft 2, the transverse means 12 pushes the section 43 of the spring 4, this spring 4, which is supported in the tap body 10, resisting against the pressing movement of the rotary shaft 2.

In the shown embodiment, the rotary shaft 2 ends, in the end directed towards the tap body 10, at one end 24 which comprises a rim 25 in at least one section of its edge, projecting perpendicular to the longitudinal axis of the rotary shaft 2. The transverse means 12 of the rotary shaft 2 projects from the rim 25 in the same direction and towards the outside, therefore being transverse to the rotary shaft 2, this transverse means 12 being in the form of a rectangular tab in this embodiment.

The spring 4 also comprises a tab 43 the function of which is to fix said spring 4 to the cover 14 and thus prevent the spring 4 from moving when the pressing and/or turning movement is performed. The tab 43 is parallel to the longitudinal axis of the rotary shaft 2, and projects from the upper edge 41 of the spring 4 towards the cover 14. The rotary shaft 2 comprises at its end 24 a tab 26 which is parallel to the longitudinal axis of the rotary shaft 2 and projects from the end 34 into an area of the edge where the rim 25 does not project, and the function of which is to drive the conical regulating member 11 for gas flow regulation when the rotary shaft 2 is turned by the user. To enable performing the driving function, the conical member 11 comprises a slot 11a arranged on the side surface of a cylindrical section which projects from the conical member 11 towards the cover 14 and allows housing the return spring 13, such that this slot 11 a allows housing the tab 26.

In this embodiment, as shown in Figure 3, the cover 14 comprises on its internal face 14e, a housing 14a for the transverse means 12, the housing 14a being arranged in a position corresponding to the initial OFF position 100 of the rotation of the shaft 2. The cover 14 also comprises a sliding surface 14b on which the transverse means 12 slides when the rotary shaft 2 is turned at angle A. The internal face 14e also comprises a housing 14d for the fixing tab 43 the spring 4, the position of the housing 14d for the tab 43 being outside the travel of the angle of rotation A, so there can be no interference whatsoever of the transverse means 12, housed in the initial position 100 in the housing 14a, and when the rotary shaft 2 turns the angle of rotation A it is shifted to the stop of the final position 101, with the tab 43 of the spring 4 housed in the housing 14d.

The return spring 13 of the shaft 2 is supported at one end 13a on an edge 11 b of the conical member 11, and is housed lengthwise in the cylindrical section projecting from the conical member 11 towards the cover 14, and is inside the return spring 13. When the spring 4 is supported on the edge 15 of the tap body 10, it is assembled concentrically with the return spring 13 arranged therein. In said situation, the other end 13b of the return spring 13 rests on the rim 25 of the end 24 of the rotary shaft 2, the return spring 13 and the spring 4 resisting against pressing the rotary shaft 2. When the user opens the gas tap 1, he/she first presses the rotary shaft 2 to be able to release the gas tap 1. The blocking occurs because the transverse means 12 of the rotary shaft 2 is housed in the housing 14a of the cover 14 due to the push of the return spring 13, and to release it the user has to overcome the force of said return spring 13 along with the force of the spring 4. When the pressing movement has been performed, the user then performs the rotary movement throughout angle A, in which movement the conical member 11 is driven with the aid of the drive tab 26 that is housed in the slot 11 a of the conical member 11. In this rotational movement, at least in the section of the angle A to the intermediate position 102 of maximum gas flow, the rotary shaft 2 is kept pressed so the transverse means 12 which is initially in contact with the section 42 of the spring 4 no longer has contact during the rotation since the upper edge 41 of the spring 4 has a coil shape. Adding a new form of friction against the rotary movement of the rotary shaft 2 is thus prevented.

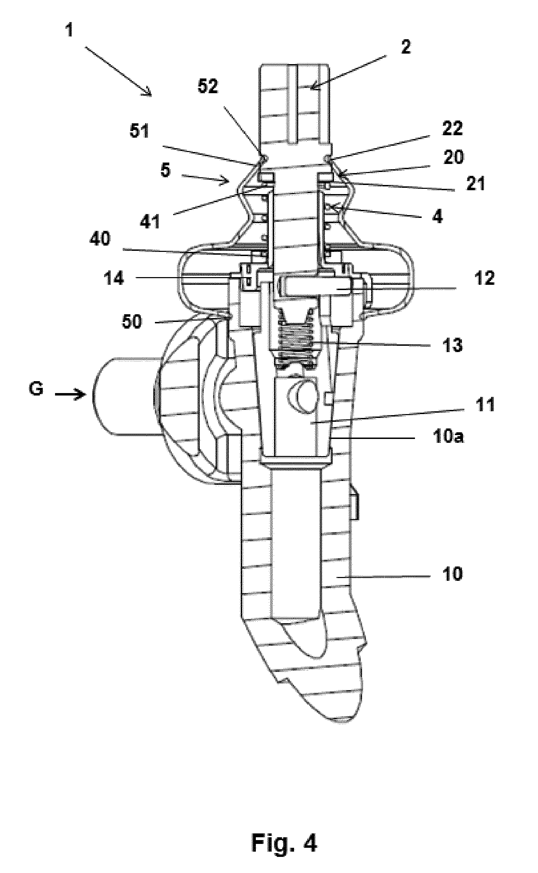

Figure 4 shows another embodiment of the gas tap 1 of the invention in a longitudinal section view. This embodiment differs from the embodiment of Figure 1 in that the resistance means 4, instead of being arranged inside the gas tap 1, is arranged outside the tap body 10. The rest of the functional and operational characteristics are the same as the ones of the gas tap 1 of Figure 1, and therefore will not be explained again.

The resistance means 4 of the gas tap of Figure 4 is a coil spring working under compression, comprising a substantially planar lower edge 40 supported on the outer surface of the cover 14 of the gas tap 1, and a substantially planar upper edge 41 resting on a stop 20 of the rotary shaft 2. The resistance means 4 is arranged such that it is coaxial with the rotary shaft 2. In this embodiment, the stop 20 of the rotary shaft 2 is a recess 21 in the diameter of the rotary shaft 2, the upper edge 41 of the resistance means 4 resting on the lower portion of the recess 21 of the rotary shaft 2.

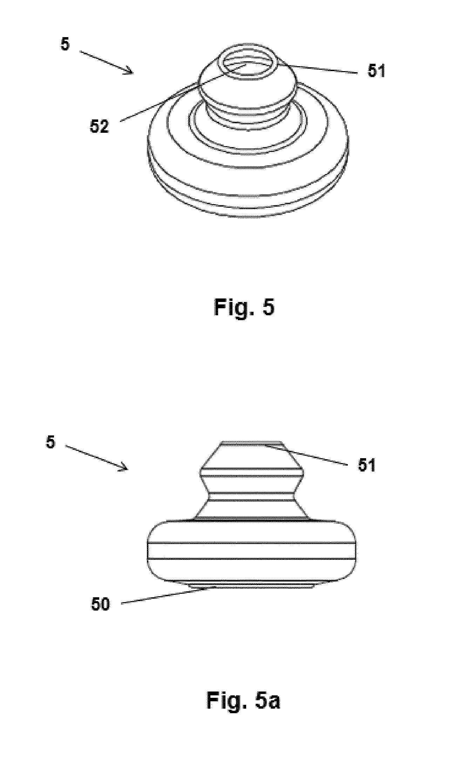

Due to the outer factors that the gas tap 1 must withstand during operation when it is assembled in a gas cooking appliance, such as temperature due to gas burners when they are switched on, and the combination of moisture and temperature, the resistance means 4 and the elements used for assembly thereof in the gas tap 1 need protection against said external factors which can cause said resistance means 4 to malfunction. For this purpose, in this embodiment the gas tap 1 comprises a protective element 5 made of a flexible material, preferably of silicone, that withstands at least 150ºC, covering the resistance means 4 on the outside. Figure 5 shows a perspective view of the protective element 5 of the gas tap 1 of Figure 4, and Figure 5a shows a front view of the protective element 5 of the gas tap 1 of Figure 4. Said protective element 5 comprises a base 50 which is supported on the tap body 10, and an upper end 51 with a hole 52 allowing the passage of the rotary shaft 2. Said upper end 51 is housed in a slot 22 comprised in the rotary shaft 2, said slot 22 being orthogonal to the longitudinal axis of the rotary shaft 2, said slot 22 being arranged in the rotary shaft 2 in a position further away from the cover 14 than the recess 21 of the rotary shaft 2. The upper edge 41 of the resistance means 4 rests on the lower portion of the recess 21, such that when the rotary shaft 2 is pressed, the recess 21 pushes the resistance means 4 against the cover 14 and the slot 22 drives the protective element 5, said protective element 5 collapsing. Therefore, the user needs to overcome the force of the resistance means 4, in addition to the force of the return spring 13, to perform the maneuver of opening the gas tap 1, and at the same time said resistance means 4 is protected from external factors with the protective element 5.

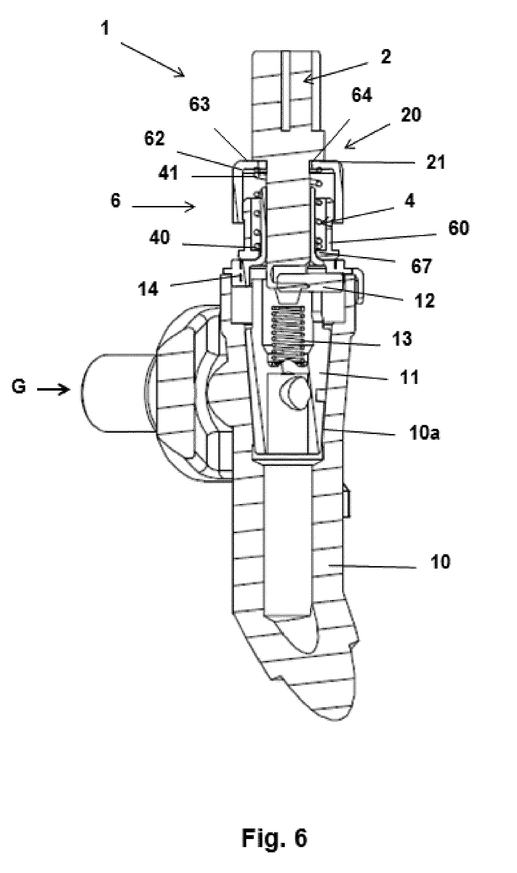

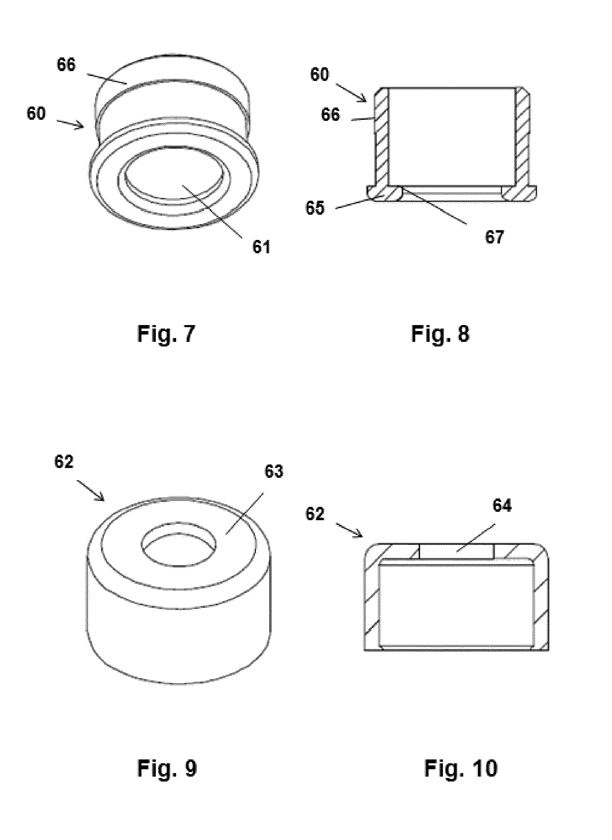

Figure 6 shows a longitudinal section view of a second embodiment of the gas tap 1 of the invention, with the resistance means 4 arranged outside the tap body 10. In said embodiment, the gas tap 1 comprises a protective assembly 6 covering the resistance means 4 on the outside. Said protective assembly 6 comprises a substantially cylindrical hollow fixed body 60 comprising a circular base 65 which is supported on the cover 14 of the gas tap 1, said fixed body 60 comprising a hole 61 allowing the passage of the rotary shaft 2. Said base 65 forms a flange 67 inside the fixed body 60. The protective assembly 6 also comprises a substantially cylindrical hollow movable body 62, which is assembled on the fixed body 60 and slides on the outside of the fixed body 60 once assembled, said movable body 62 comprising an upper surface 63 with a hole 64 allowing the passage of the rotary shaft 2. Figure 7 shows a perspective view of the fixed body 60 of the protective assembly 6 of the gas tap 1 of Figure 6, and Figure 8 shows a longitudinal section view of the fixed body 60 of Figure 7. Figure 9 shows a perspective view of the movable body 62 of the protective assembly 6 of the gas tap 1 of Figure 6, and Figure 10 shows a longitudinal section view of the movable body 62 of Figure 9. The resistance means 4 is housed inside the protective assembly 6, the upper edge 41 of the resistance means 4 resting on the internal face of the upper surface 63 of the movable body 62 and being coaxial with the hole 64. Once the protective assembly 6 is assembled with the resistance means 4 therein, the outer face of the upper surface 63 rests on the lower portion of the recess 21 of the rotary shaft 2.

The fixed body 60 comprises on its outer side surface a section 66 in the upper portion with an outer diameter greater than the diameter of the rest of the side surface of said fixed body 60. The movable body 62 comprises an internal side surface with an internal diameter that fits the outer diameter of the section 66 of the fixed body 60. In this second embodiment, the resistance means 4 is also a coil spring working under compression, comprising a substantially planar lower edge 40 which is supported on the flange 67 of the fixed body 60.

Therefore, when the rotary shaft 2 is pressed, the recess 21 pushes the upper surface 63 of the movable body 62, said upper surface 63 in turn pushing the resistance means 4 against the cover 14. The movable body 62 shifts on the fixed body 60 and the user needs to overcome the force of the resistance means 4, in addition to the force of the return spring 13, to perform the maneuver of opening the gas tap 1, and at the same time said resistance means 4 is protected from external factors with the protective assembly 6.

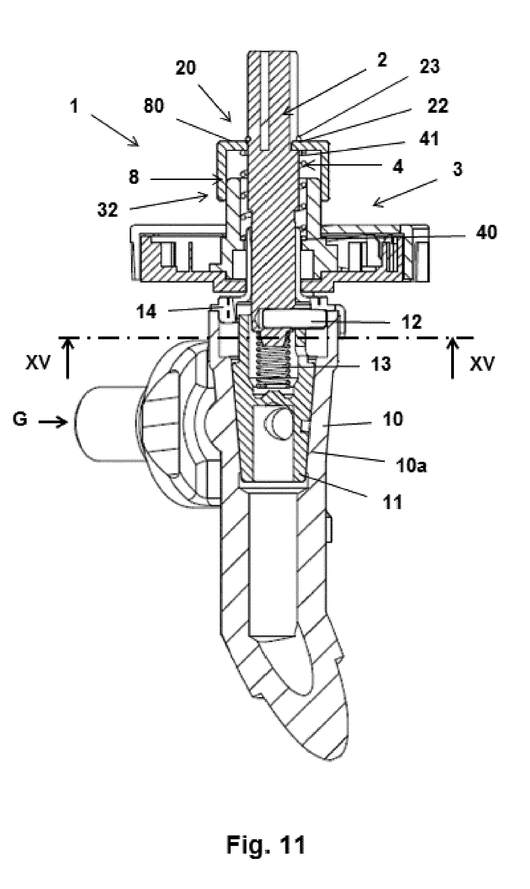

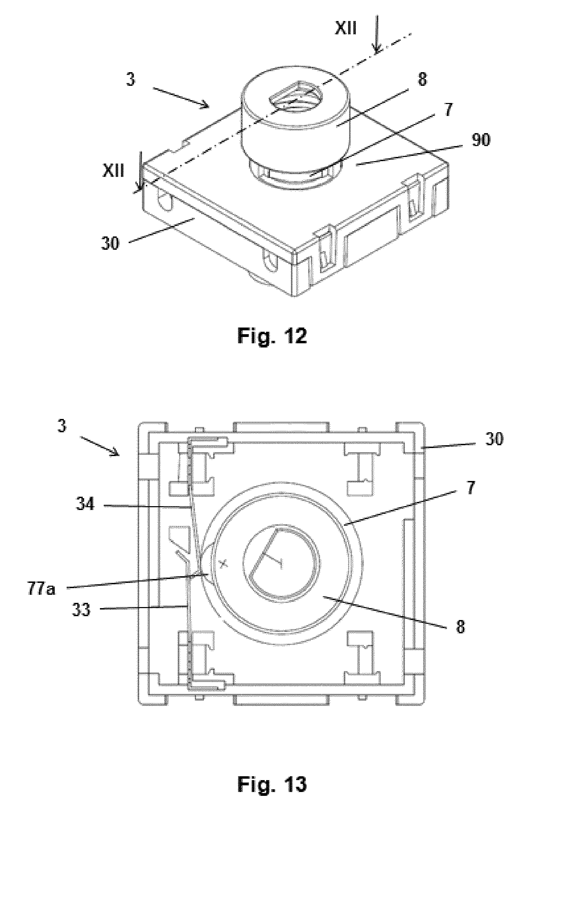

Figure 11 shows a longitudinal section view of a third embodiment of the gas tap 1 of the invention, with the resistance means 4 arranged outside the tap body 10. In said embodiment, the gas tap 1 comprises an ignition switch assembly 3 coupled to the rotary shaft 2, the resistance means 4 being arranged in the ignition switch assembly 3. Figure 12 shows a top perspective view of the ignition switch assembly 3 of the gas tap 1 of Figure 11, and Figure 13 shows a plan view of the ignition switch assembly 3 of Figure 12 without the front cover 90. In this embodiment, said ignition switch assembly 3 is in the form of a box and comprises a casing 30 suitable for being fixed to the gas tap 1, for which it comprises housings (not shown in the drawings) which allow attaching with the cover 14 by means of attachment elements. The ignition switch assembly 3 also comprises a fixed contact means 33 and a movable contact means 34 housed in the casing 30, which allow producing electrical contact when they are joined together, a front cover 90 closing the casing 30, and a protective assembly 32 that turns and is integral with the rotary shaft 2 in the rotational movement of said shaft. The resistance means 4 is housed inside the protective assembly 32, being coaxial with the rotary shaft 2.

The protective assembly 32 comprises a cam assembly 7 which is coupled to the casing 30 and to the front cover 90, being housed partially inside the switch 3, and projecting partially from the front cover 90 towards the outside, the cam assembly 7 turning in its housing in the casing 30 and the front cover 90 when the rotary shaft 2 performs a rotational movement, and the ignition switch assembly 3 also comprises a drive cover 8 coupled to the cam assembly 7, which is integral with the rotary shaft 2, said drive cover 8 turning when said rotary shaft 2 performs a rotational movement.

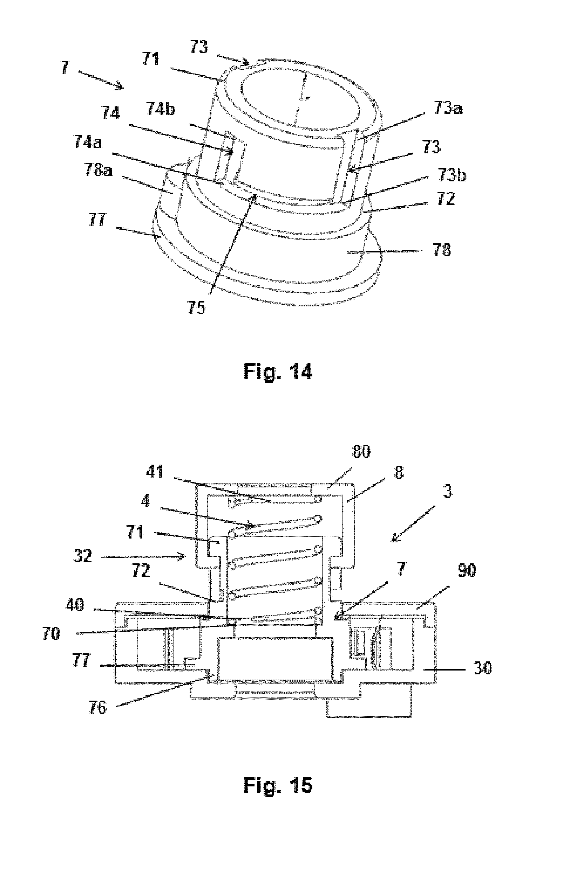

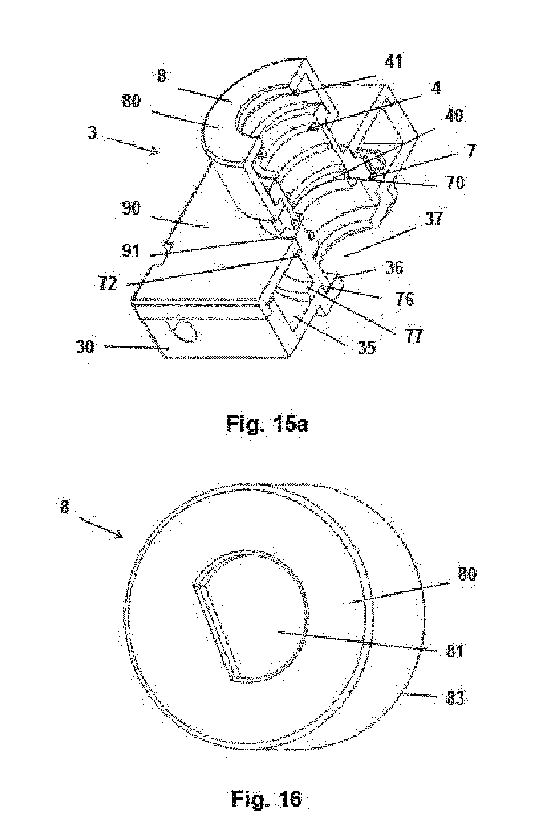

Figure 14 shows a perspective view of the cam assembly 7 of the ignition switch assembly 3 of Figure 12, and Figure 15 shows a front section view of the ignition switch assembly 3 according to line XII-XII of Figure 12. Said cam assembly 7 is a substantially cylindrical body having different diameters externally and internally with various functions that will be explained below. Said cam assembly 7 is internally hollow with respect to its longitudinal axis, said hollow allowing the passage of the rotary shaft 2. The cam assembly 7 comprises a lower end 76 and an upper end 71, a substantially planar internal side surface with a flange 70, and an outer side surface with a rim 77 close to the lower end 76, projecting orthogonally with respect to the longitudinal axis of the cam assembly 7, forming an angle bracket between the rim 77 and the lower end 76. On the outer side surface, a flange 72 is located substantially in the central zone, and a substantially planar surface 78 is located between the rim 77 and the flange 72 where a cam 78a is arranged. This cam 78a projects from the planar surface 78 in an angular section of the circumference of said planar surface 78, and has a shape which allows shifting the fixed contact means 33 towards the movable contact means 34 in a section of the angle of rotation A when the cam assembly 7 is turned.

Figure 15a shows a perspective section view of the ignition switch assembly 3 according to line XII-XII of Figure 12. The casing 30 comprises a base 35 as a bottom, in which there is a circular housing 36 substantially centered in said base 35, forming a height recess with respect to said base 35, said housing 36 comprising a hole 37 in its center. The front cover 90 of the ignition switch assembly 3 comprises a hole 91 substantially centered with the hole 37 of the casing 30, the holes 37 and 91 allowing the passage of the rotary shaft 2. The rim 77 and the lower end 76 of the cam assembly 7 are fitted such that they rest on the edge formed between the base 35 and the housing 36 of the casing 30, such that the rim 77 can slide on the base 35, whereas the lower end 76 of the cam assembly 7 rests on the edge formed between the base 35 and the housing 36 of the casing 30. Once said fitting is performed, the front cover 90 fits with the cam assembly 7 through hole 91, the edge of the hole 91 resting on the flange 72 of the cam assembly 7.

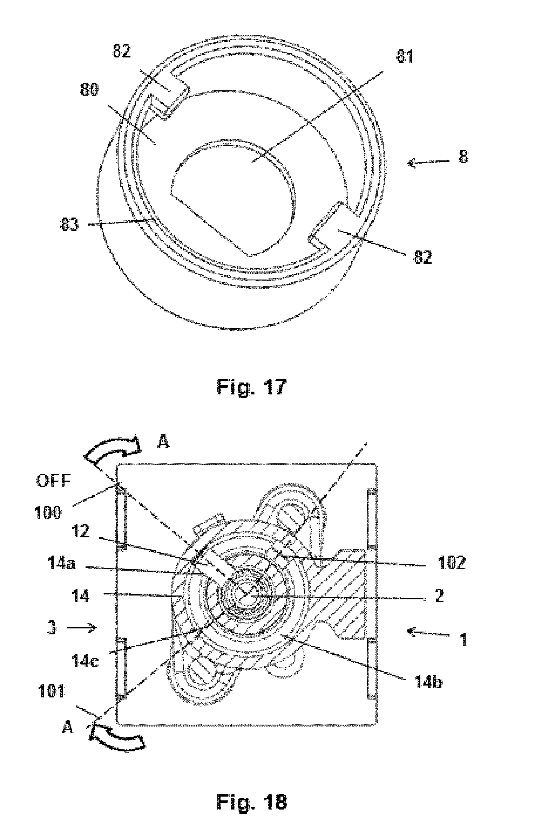

Figure 16 shows a front perspective view of the drive cover 8 of the ignition switch assembly 3 of Figure 12, and Figure 17 shows a rear perspective view of said drive cover 8. The drive cover 8 is a substantially cylindrical hollow body, being hollow in its longitudinal axis, allowing the passage of the rotary shaft 2 therethrough. Said drive cover 8 is partially closed in its upper portion by an upper surface 80, said upper surface 80 comprising a substantially centered hole 81. In this embodiment, said hole 81 is D-shaped which allows coupling to the rotary shaft 2 having the same shape in that zone of the shaft, which allows making the drive cover 8 integral with the rotary shaft 2 when said rotary shaft 2 turns in a rotational movement. In this embodiment, the drive cover 8 comprises two ribs 82 arranged on the circular edge of the lower end 83 of the drive cover 8, said ribs 82 projecting orthogonally with respect to the longitudinal axis of the drive cover 8 towards the inside thereof. The height of the ribs 82 in the direction of the longitudinal axis of the drive cover 8 can be variable, and the width in the direction of the circumference of the lower end 83 of the drive cover 8 is different in each of the two ribs 82, both ribs 82 in said circular edge of the lower end 83 being arranged at about 180º with respect to one another.

In Figure 14 where the cam assembly 7 is shown in a perspective view, in this embodiment said cam assembly 7 comprises on its outer side surface, and above the flange 72 two open channels 73 and two closed channels 74 that are substantially vertical in the direction of the longitudinal axis of the cam assembly 7. The cam assembly 7 also comprises two connection channels 75 in that zone that are substantially horizontal, and therefore circling the outside of the side surface, each connecting an open channel 73 with a closed channel 74. Each of the open channels 73 comprises an open end 73a arranged at the upper end 71 of the cam assembly 7, and a lower end 73b connected with the corresponding connection channel 75. Each of the closed channels 74 comprises a lower end 74a connecting with the corresponding connection channel 75, and an upper closed end 74b closed by the side surface of the cam assembly 7. The open channels 73 are arranged at about 180º with respect to one another, and the closed channels 74 are also arranged at about 180º with respect to one another. This arrangement of the different channels of the cam assembly 7 connected to one another allows coupling the drive cover 8 with the cam assembly 7. To perform said coupling, the widths of the two open channels 73, in the direction of the circumference of the upper end 71 of the cam assembly 7, are different from one another, similarly the widths of the two closed channels 74, in the direction of the circumference of the side surface of the cam assembly 7, are also different from one another, but the same as the respective widths of the open channels 73, each of said different widths coinciding with the different widths of the two ribs 82, respectively. The drive cover 8 is thus coupled to the cam assembly 7 by fitting the ribs 82 coinciding in width in each open channel 73, the drive cover 8 thus being assembled in the cam assembly 7 with a poka-yoke formed, two by two, with the different width of the ribs 82 and the open channels 73 and closed channels 74. The drive cover 8 is then shifted vertically downwards along the open channels 73 to the lower end 73b thereof, and connecting with each connection channel 75. The drive cover 8 is then turned counter-clockwise an angle of about 90º, shifting the ribs 82 along said connection channels 75 to the lower end 74b of the closed channels 74.

Figures 15 and 15a show the resistance means 4 as assembled in the ignition switch assembly 3, and Figure 11 shows what said assembly is like in the assembly of the gas tap 1 of this third embodiment of the invention. The resistance means 4 is a compressed spring, with a substantially planar lower edge 40 supported on the flange 72 of the cam assembly 7, and a substantially planar upper edge 41 resting on the internal face of the upper surface 80 of the drive cover 8 when said drive cover 8 is coupled to the cam assembly 7, the resistance means 4 being coaxial with the rotary shaft 2. When coupling the drive cover 8 to the cam assembly 7, and after placing the ribs 82 of said drive cover 8 at the lower end 74b of the closed channels 74, the force exerted by the resistance means 4 on the internal face of the upper surface 80 of the drive cover 8 shifts said ribs 82 and therefore the drive cover 8 vertically upwards along the closed channels 74 until they abut the upper end 74b of said closed channels 74. The drive cover 8 is thus assembled in the cam assembly 7 and therefore in the ignition switch assembly 3.

Figure 11 shows the rotary shaft 2 as part of the gas tap 1 and in which the ignition switch assembly 3 is coupled. Said rotary shaft 2 comprises a stop 20 orthogonal to the longitudinal axis of the rotary shaft 2, the stop 20 being a washer 23 housed in a slot 22 orthogonal to the longitudinal axis of the rotary shaft 2, the slot 22 being arranged in a position along the length of the rotary shaft 2 such that said washer 23 abuts the outer face of the upper surface 80 of the drive cover 8. When the user manually operates the rotary shaft 2 to maneuver the gas tap 1, the first operation that he/she performs is to press said rotary shaft 2. With the described arrangement of the washer 23, upon pressing the rotary shaft 2, it drives the washer 23 in the shifting movement, and since said washer 23 rests on the upper surface 80 of the drive cover 8, said drive cover 8 is shifted. The shifting is allowed by the ribs 82 housed in the closed channels 74 of the cam assembly 7 at its upper end 74b, said ribs 82 being shifted along the closed channels 74 but without coming out of same. The resistance means 4 resist against the shifting of the ribs 82 of the drive cover 8, which is coupled in the resistance to said shifting with the resistance force exerted by the return spring 13 against the pressing movement of the rotary shaft 2. The spring forming the resistance means 4 has a defined force preventing the ribs 82 of the drive cover 8 from reaching the lower end 74a of the closed channels 74, the rotary shaft 2 furthermore having a mechanical stop resting on the cover 14 and preventing it from exceeding the length of travel of the closed channels 74.

Figure 18 shows a cross-section view of the gas tap 1 according to line XV-XV of Figure 11. Said Figure 18 shows the internal face of the cover 14 of the gas tap 1. In said internal face the cover 14 comprises a housing 14a for the transverse means 12 of the rotary shaft 2 blocking the rotation of the rotary shaft 2, a sliding surface 14b for the transverse means 12 and a stop 14c. The rotary shaft 2 can turn an angle of rotation A in any of the two directions from an initial position 100 located at 0º corresponding to the closed OFF position of the gas flow to a final position 101 corresponding to a minimum gas flow which is located at 270º, and passes through an intermediate position 102 corresponding to a maximum gas flow located at 90º. When the gas tap 1 is closed, the transverse means 12 is arranged in the housing 14a in the initial OFF position 100 blocking the rotation of the rotary shaft 2, and when said gas tap 1 is to be opened the rotary shaft 2 is pressed, overcomes the resistance force of the return spring 13 and of the resistance means 4, the transverse means 12 being released from its housing 14a. When the rotary shaft 2 is turned, the transverse means slides along the sliding surface 14b, passing through the intermediate position 102, and can reach the stop 14c indicating the final position 101 of minimum gas flow.

When the rotary shaft 2 performs the rotational movement, the gas flow of the gas tap 1 opens at an angle of about 40º, and from that moment gas starts to flow. In the rotational movement, in the gas tap 1 of the third embodiment shown in Figure 11, the cam 78a starts to contact with the movable contact means 34 of the cam assembly 7 at an angle of about 20º and the contact is maintained up to an angle of about 115º. In the contact movement, the movable contact means 34 is shifted until contacting with the fixed contact means 33, electrical contact being produced in that contact in at least one turning direction from the initial position 100, and sparks thereby being produced by means of the spark generator (not shown in the drawings), finally causing the ignition of the flame. A sufficiently large section of the angle of rotation A of 20º to 115º is thus obtained so that flame can be generated from the position of 40º in which there is already gas flow, and the user can stop pressing the rotary shaft 2 in the position 102 of maximum gas flow due to the initiation of the opening of the gas tap 1, and can then regulate the position of the shaft 2 where needed.

## Claims

1. Gas tap for a cooking appliance comprising a tap body (10) with a conical internal housing (10a) suitable for receiving a conical rotational member (11) for regulating gas flow (G), a manually-operated rotary shaft (2) coupled to the conical regulating member (11), and provided with a transverse means (12), a return spring (13) of the rotary shaft (2) that resists against the pressing movement of said shaft (2), and a cover (14) covering the housing (10a) of the tap body (10), guiding the rotation of the shaft (2) in cooperation with the transverse means (52), **characterized in that** it comprises at least one resistance means (4), other than the return spring (13), that resists against the pressing movement of the rotary shaft (2).

2. Gas tap according to the preceding claim, wherein the resistance means (4) is a spring, preferably a coil spring with at least two spirals, comprising a planar lower edge (40) which is supported on an edge (15) of the tap body (10), and an upper edge (41) resting on at least one section (42) in the transverse means (12) of the rotary shaft (2), resisting against the pressing movement of the rotary shaft (2).

3. Gas tap according to claim 1 or 2, wherein the transverse means (12) is perpendicular to the longitudinal axis of the rotary shaft (2), projecting from a rim (25), also perpendicular to the longitudinal axis of the rotary shaft (2), of an end (24) of the rotary shaft (2), the spring (4) comprising a fixing tab (43) for fixing with the cover (14), the tab (43) being parallel to the longitudinal axis of the shaft (2) and projecting from the upper edge (41) of the spring (4).

4. Gas tap according to the preceding claim, wherein the rotary shaft (2) comprises a drive tab (26) for driving the conical regulating member (11), which projects from the end (24) of said rotary shaft (2) and is parallel to the longitudinal axis of the rotary shaft (2), and the conical regulating member (11) comprises a slot (11a) housing the drive tab (26), the slot (11a) being parallel to the longitudinal axis of the rotary shaft (2), driving the rotary shaft (2) to the conical member (11) when the rotary shaft (2) turns, and contacting the transverse means (12) with the upper edge (41) of the spring (4) substantially in the section (42).

5. Gas tap according to claim 3 or 4, wherein the cover (14) comprises on its internal face (14e) a housing (14a) for the transverse means (12), the housing (14a) being arranged in a position corresponding to an initial OFF position (100) of the rotation of the shaft (2), a sliding surface (14b) for the transverse means (12) in its rotation of an angle (A), and a housing (14d) for the fixing tab (43) of the spring (4) outside the travel of the angle (A) of rotation.

6. Gas tap according to any of claims 3 to 5, wherein the return spring (13) of the rotary shaft (2) is arranged concentrically inside the spring (4), resting at one end (13a) on an edge (11 b) of the conical member (11), and resting at another end (13b) on the rim (25) of the end (24) of the rotary shaft (2), the return spring (13) and the spring (4) resisting against the pressing of the shaft (2).

7. Gas tap according to claim 1, wherein the resistance means (4) is arranged outside the tap body (10), the resistance means (4) being preferably a coil spring working under compression, the resistance means (4) comprising a substantially planar lower edge (40) cooperating with the cover (14) of the gas tap (1), and a substantially planar upper edge (41) cooperating with a stop (20) of the rotary shaft (2), the resistance means (4) being coaxial with the rotary shaft (2).

8. Gas tap according to the preceding claim, wherein the stop (20) of the rotary shaft (2) is a recess (21) of the diameter of the rotary shaft (2), the upper edge (41) of the resistance means (4) cooperating with the lower portion of the recess (21) of the rotary shaft (2), and the lower edge (40) of the resistance means (4) being supported on the cover (14) of the gas tap (1).

9. Gas tap according to the preceding claim, comprising a protective element (5) made of a flexible material, preferably of silicone, covering the resistance means (4) on the outside, the protective element (5) comprising a base (50) which is supported on the tap body (10), and an upper end (51) with a hole (52) allowing the passage of the rotary shaft (2), said upper end (51) being housed in a slot (22) orthogonal to the longitudinal axis of the rotary shaft (2), said slot (22) being arranged in a position further away from the cover (14) than the recess (21) of the rotary shaft (2), and the upper edge (41) of the resistance means (4) resting on the lower portion of the recess (21) of the rotary shaft (2), allowing the protective element (5) to collapse when pressing the rotary shaft (2).

10. Gas tap according to claim 8, comprising a protective assembly (6) covering the resistance means (4) on the outside, the protective assembly (6) comprising a substantially cylindrical hollow fixed body (60) with a circular base (65) supported on the cover (14), the fixed body (60) comprising a hole (61) allowing the passage of the rotary shaft (2), and the base (65) comprising an internal flange (67), and a substantially cylindrical hollow movable body (62) sliding on the outside of the fixed body (60), said movable body (62) comprising an upper surface (63) with a hole (64) allowing the passage of the rotary shaft (2), the resistance means (4) being housed inside the protective assembly (6), the upper edge (41) of the resistance means (4) resting on the internal face of the upper surface (63) of the movable body (62), and the outer face of said upper surface (63) resting on the lower portion of the recess (21) of the rotary shaft (2), and the lower edge (40) of the resistance means (4) being supported on the flange (67) of the fixed body (60), the fixed body (60) comprising preferably on its outer side surface a section (66) in the upper portion with an outer diameter greater than the rest of the fixed body (60), and the movable body (62) has an internal diameter that fits the outer diameter of the section (66) of the fixed body (60), allowing the shifting of the movable body (62) on the fixed body (60) when pressing the rotary shaft (2).

11. Gas tap according to claim 7, comprising an ignition switch assembly (3) coupled to the rotary shaft (2), the resistance means (4) being arranged in the ignition switch assembly(3), the ignition switch assembly (3) comprising preferably a casing (30) suitable for being fixed to the gas tap (1), a fixed contact means (33) and a movable contact means (34) housed in the casing (30), a front cover (90) closing the casing (30), and a protective assembly (32) that turns and is integral with the rotary shaft (2) in a rotational movement, the resistance means (4) being housed inside the protective assembly (32), the protective assembly (32) comprising a cam assembly (7) which is a substantially cylindrical hollow body that is coupled to the casing (30) and to the front cover (90), projecting from the front cover (90), and turning in the rotational movement of the rotary shaft (2), and a drive cover (8) which is a substantially cylindrical hollow body coupled to the cam assembly (7) and is integral with the rotary shaft (2).

12. Gas tap according to the preceding claim, wherein the drive cover (8) comprises an upper surface (80) with a hole (81) having a shape which allows coupling to the rotary shaft (2) and being integral in a rotational movement, and the cam assembly (7) comprises a substantially planar internal side surface with a flange (70), the stop (20) of the rotary shaft (2) being a washer (23) housed in a slot (22) orthogonal to the longitudinal axis of the rotary shaft (2), the upper edge (41) of the resistance means (4) resting on the internal face of the upper surface (80) of the drive cover (8), and the outer face of said upper surface (80) resting on the washer (23), and the lower edge (40) of the resistance means (4) being supported on the flange (70) of the cam assembly (7), the drive cover (8) comprising at least two ribs (82), preferably two of different width in the angular direction and arranged at about 180º with respect to one another, arranged on the circular edge of the lower end (83) of the drive cover (8), projecting orthogonally with respect to the longitudinal axis of the drive cover (8) towards the inside thereof, and the cam assembly (7) comprises an upper end (71) and an outer side surface with a flange (72) substantially in the central zone, said upper side surface comprising, above the flange (72), at least two open channels (73), preferably arranged at about 180º with respect to one another, and at least two closed channels (74) that are substantially vertical, preferably arranged at about 180º with respect to one another, the open channels (73) and the closed channels (74) being of different width in the angular direction, and at least two connection channels (75) that are substantially horizontal, preferably two, each one connecting an open channel (73) with a closed channel (74), each open channel (73) comprising an open end (73a) arranged in the upper end (71) of the cam assembly (7), and a lower end (73b) connected with the connection channel (75), and each closed channel (74) comprising a lower end (74a) connected to the connection channel (75) and an upper closed end (74b), the cam assembly (7) allowing the coupling of the drive cover (8) by inserting the ribs (82) in each open channel (73), passing through each connection channel (75) and being housed in each closed channel (74), allowing the shifting of the drive cover (8) on the cam assembly (7) and the resistance means (4) resisting when pressing the rotary shaft (2), the ribs (82) being shifted along the closed channels (74) and being kept therein.

13. Gas tap according to the preceding claim, wherein the cam assembly (7) comprises a lower end (76), the outer side surface comprises in the lower zone thereof a rim (77) close to the lower end (76) projecting orthogonally with respect to the longitudinal axis of the cam assembly (7), and a substantially planar surface (78) between the rim (77) and the flange (72) where there is arranged a cam (78a) which allows shifting the fixed contact means (33) towards the movable contact means (34) when the cam assembly (7) is turned, and the casing (30) comprises a base (35) comprising a circular housing (36) with a centered hole (37), and the front cover (90) comprises a hole (91) centered with respect to the hole (37) of the casing (30), the holes (37) and (91) allowing the passage of the rotary shaft (2), the rim (77) and the lower end (76) fitting on the edge formed between the base (35) and the housing (36) of the casing (30), and the hole (91) of the front cover (90) fitting on the flange (72) of the cam assembly (7).

14. Gas tap according to the preceding claim, wherein the rotary shaft (2) can turn an angle of rotation (A) in any of the two directions from an initial position (100) located at 0º corresponding to the closed OFF position of the gas flow to a final position (101) corresponding to a specific gas flow, preferably a minimum gas flow, located between about 160º and about 270º, and passing through an intermediate position (102) corresponding to a maximum gas flow, located at about 90º, the cover (14) comprising on its internal face a housing (14a) for the transverse means (12) arranged in the initial OFF position (100) blocking the rotation of the rotary shaft (2), a sliding surface (14b), and a stop (14c) arranged in the final position (101), such that pressing the rotary shaft (2), overcoming the resistance of the return spring (13) and of the resistance means (4), allows releasing the transverse means (12) from the initial position (100).

15. Gas tap according to the preceding claim, wherein when the rotational movement of the rotary shaft (2) occurs, the gas flow opens at an angle of about 40º, the cam (78a) of the cam assembly (7) contacting with the movable contact means (34) between an angle of about 20º and an angle of about 115º, the movable contact means (34) shifting until contacting with the fixed contact means (33), electrical contact being produced at least in one turning direction from the initial position (100).
